# EUROPÄISCHE PATENTSCHRIFT

(11) **EP 0 955 456 B1**
(45) Veröffentlichungstag und Bekanntmachung des Hinweises auf die Patenterteilung: **28.12.2011**
(21) Anmeldenummer: 99108167.0
(22) Anmeldetag: 26.04.1999
(51) Int. Cl.: F02C 7/04, F15D 1/04, F04D 29/42

(54) **Gasturbinenanlage mit einer Zustromleitung**
Gas turbine with an inlet conduit
Turbine à gaz avec un conduit d'entrée

(30) Priorität: 04.05.1998 DE 19819769
(43) Veröffentlichungstag der Anmeldung: 10.11.1999
(73) Patentinhaber: SIEMENS AKTIENGESELLSCHAFT, 80333 München (DE)
(72) Erfinder: Bähr, Siegfried, 91330 Eggolsheim (DE); Rau, Thomas, 91056 Erlangen (DE)

(56) Entgegenhaltungen:
- EP-A- 0 493 302
- DE-A- 4 326 800
- DE-C- 192 795
- GB-A- 805 003
- US-A- 3 623 511
- US-A- 3 986 790
- PATENT ABSTRACTS OF JAPAN vol. 010, no. 010 (M-446), 16. Januar 1986 (1986-01-16) -& JP 60 172713 A (HITACHI SEISAKUSHO KK), 6. September 1985 (1985-09-06)

## Beschreibung

Die Erfindung bezieht sich auf eine Gasturbinenanlage.

Eine Gasturbinenanlage wird üblicherweise zur Erzeugung elektrischer Energie eingesetzt. Dabei wird der Energieinhalt eines Brennstoffes zur Erzeugung einer Rotationsbewegung einer Turbinenwelle genutzt, die wiederum einen Generator oder eine Arbeitsmaschine antreibt. Beim Betrieb der Gasturbinenanlage wird üblicherweise Umgebungsluft angesaugt und in einem der Gasturbine zugeordneten Verdichter auf einen hohen Druck verdichtet. Der größte Anteil der verdichteten Luft gelangt in eine oder mehrere Brennkammern und wird dort zur Verbrennung des Brennstoffs eingesetzt. Das dort entzündete Gemisch wird sodann der Gasturbine zugeführt.

Eine derartige Gasturbinenanlage weist üblicherweise einen Luftansaugkanal auf, der zur Zuführung von Luft in das Gehäuse des Luftverdichters vorgesehen ist. Dabei kann eine Umlenkung der Strömung der Luft vorgesehen sein. Bei der Umlenkung der Strömung kann diese sich von der Wand ablösen und Verwirbelungen bilden. Hierdurch können Druckverluste im gasförmigen Medium entstehen, die wiederum zu unerwünschten Leistungsverlusten der Gasturbine führen können. Außerdem besteht die Gefahr, daß mit der Strömung in Kontakt stehende Bauteile durch Wirbel der Strömung in Schwingungen versetzt werden, was zu Schäden und im Extremfall zu einer Zerstörung der gesamten Anlage führen kann.

Eine Umlenkung der Strömung um annähernd 90° ist häufig an der Stelle vorgesehen, an der der Luftansaugkanal in das Gehäuse des Luftverdichters mündet. Üblicherweise ist deswegen im auch als Auslauf bezeichneten Einmündungsbereich des Luftansaugkanals in das Gehäuse des Luftverdichters ein als Bell-Mouth bezeichnetes Bauteil angeordnet, das den gesamten Innenumfang des Luftansaugkanals umschließt. Dieses Bauteil rundet Ecken und/oder Kanten im Einmündungsbereich so ab, daß die Gefahr einer Strömungsablösung von der Wand im Einmündungsbereich besonders gering gehalten ist. Aufgrund der Größe des Innenumfangs des Luftansaugkanals von beispielsweise 5m gestalten sich hierbei die Konstruktion und die Montage der Bell-Mouth am Auslauf des Luftansaugkanals besonders aufwendig. Die erforderliche Demontage der Bell-Mouth bei Wartungs- und Reparaturarbeiten des Luftansaugkanals und/oder dem Gehäuse des Luftverdichters bedingt außerdem einen besonders hohen Arbeits- und Zeitaufwand und schränkt somit die Verfügbarkeit der Gasturbinenanlage in unerwünschter Weise ein.

Dokument DE 4326800 offenbart eine gattungsgemäße Gasturbinenanlage.

Der Erfindung liegt daher die Aufgabe zugrunde, eine Gasturbinenanlage der oben genannten Art anzugeben, bei der ein Anliegen der Strömung des gasförmigen Mediums an einer Führungswand im Einmündungsbereich einer Zustromleitung in ein Gehäuse gewährleistet ist und Wartungs- und Reparaturarbeiten mit besonders geringem technischen Aufwand durchführbar sind.

Diese Aufgabe wird für eine Gasturbinenanlage der oben genannten Art erfindungsgemäß gelöst, indem ein im Einmündungsbereich in das Gehäuse angeordneter Strömungskörper, der bewirkt, daß die dem Gehäuse zuzuführende Strömung des gasförmigen Mediums im gesamten Einmündungsbereich an einer Führungswand anliegt, einen Innenumfang des Einmündungsbereichs der Zustromleitung lediglich zu einem vorgegebenen Anteil von weniger als zwei Drittel umschließt.

Die Erfindung geht dabei von der Überlegung aus, daß ein Anliegen der Strömung im Einmündungsbereich der Zustromleitung in das Gehäuse dann gewährleistet ist, wenn im Einmündungsbereich ein Strömungskörper angeordnet ist, der in geeigneter Weise Kanten des Einmündungsbereiches abrundet. Kanten des Einmündungsbereichs erweisen sich als besonders kritisch im Hinblick auf eine Ablösung der Strömung von der Wand, wenn beim Eintritt der Strömung in das Gehäuse eine Umlenkung der Strömung um etwa 90° vorgesehen ist. Dabei sollte der Strömungskörper jedoch nur die Kanten abrunden, bei denen die Gefahr einer Strömungsablösung besteht. Dies ist bei der die Führungswand mit dem Gehäuse verbindenden Kante gegeben, bei der eine Umlenkung der Strömung um etwa 90° erfolgt. Ein besonders montagefreundlicher Strömungskörper ist einer, der nur einen Teil-Innenumfang der Zustromleitung umfaßt. Hierzu umfaßt der Strömungskörper den Innenumfang des Einmündungsbereichs der Zustromleitung zu einem vorgegebenen Anteil, vorteilhafterweise zur Hälfte.

Vorteilhafterweise ist das Gehäuse, in das die Zustromleitung mündet, das des Luftverdichters der Gasturbinenanlage. In dieser Ausgestaltung kann nämlich die als Luftansaugkanal ausgebildete Zustromleitung mit besonders geringem Platzbedarf neben dem Gehäuse des Luftverdichters angeordnet sein, wobei gleichzeitig gewährleistet ist, daß die Strömung des gasförmigen Mediums nicht von der Führungswand abreißt. Hierbei ist sogar ein spitzer Winkel zwischen der Zustromleitung und dem Gehäuse möglich.

Der Strömungskörper verjüngt sich vorteilhafterweise entlang des Innenumfangs des Einmündungsbereichs der Zustromleitung zu seinen beiden Enden hin. Auf diese Weise ist ein besonders glatter Übergang zwischen dem mit dem Strömungskörper versehenen Teilbereich des Innenumfangs des Einmündungsbereichs und dem nicht mit Strömungskörper versehenen Teilbereich des Innenumfangs des Einmündungsbereichs gewährleistet, so daß besonders zuverlässig ein Abriß der Strömung verhindert ist.

Vorteilhafterweise ist der Strömungskörper aus einer Anzahl von Blechen zusammengesetzt. Dabei weisen die Bleche im Anströmbereich zweckmäßigerweise einen kleineren Neigungswinkel relativ zur Führungswand auf als die Bleche im Abströmbereich. In dieser Ausgestaltung ist der Strömungskörper jeweils an den individuellen Winkel zwischen der Zustromleitung und dem Gehäuse anpaßbar und gewährleistet damit besonders zuverlässig, daß die Strömung nicht von der Wand abreißt.

Die mit der Erfindung erzielten Vorteile bestehen insbesondere darin, daß bei der Gasturbinenanlage die Gefahr einer Strömungsablösung von der Führungswand einer Zustromleitung im Einmündungsbereich in ein Gehäuse mit besonders geringem technischen Aufwand vermieden ist.

Ein Ausführungsbeispiel der Erfindung wird anhand einer Zeichnung näher erläutert. Darin zeigen:
- FIG 1: schematisch eine Gasturbinenanlage,
- FIG 2: einen Strömungskörper, der im Einmündungsbereich einer in ein Gehäuse mündenden Zustromleitung ange- ordnet ist,
- FIG 3: schematisch den im Einmündungsbereich der Zustrom- leitung angeordneten Strömungskörper gemäß Figur 2 und
- FIG 4: schematisch einen Schnitt IV - IV des Strömungs- körpers gemäß Figur 3.

Die Bezugszeichen in allen Figuren haben dieselbe Bedeutung.

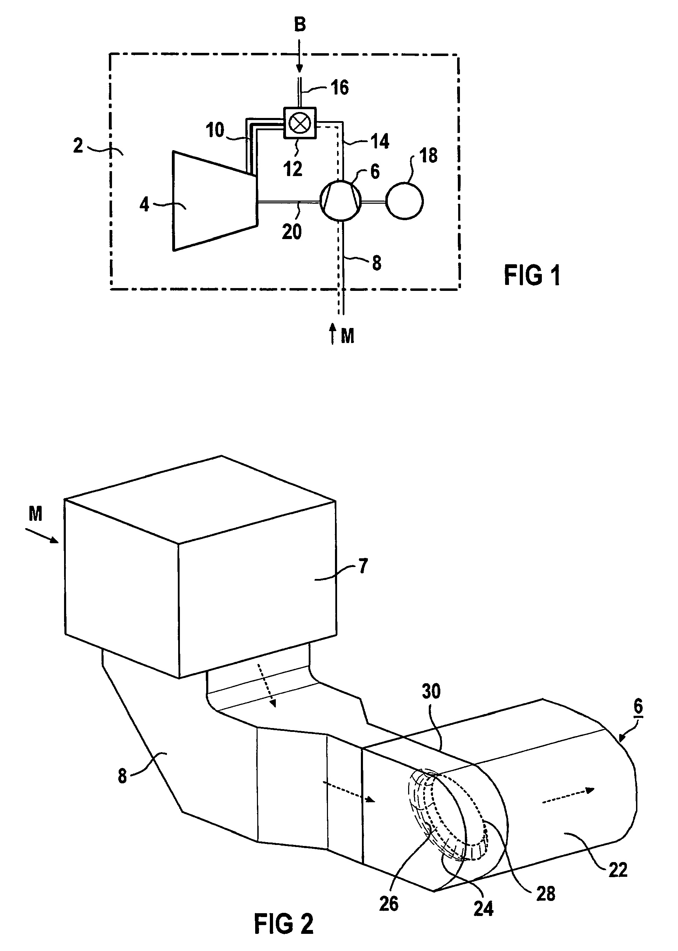

Die in Figur 1 schematisch dargestellte Gasturbinenanlage 2 umfaßt eine Gasturbine 4 mit angekoppeltem Luftverdichter 6. Der Luftverdichter 6 ist eingangsseitig an eine für Luft als gasförmiges Medium M vorgesehene Zustromleitung 8 angeschlossen. Der Gasturbine 4 ist über eine Zufuhrleitung 10 eine Brennkammer 12 vorgeschaltet, die an die Ausgangs- oder Frischluftleitung 14 des Luftverdichters 6 angeschlossen ist. In die Brennkammer 12 der Gasturbine 4 mündet eine für Brennstoff B vorgesehene Brennstoffleitung 16. Die Gasturbine 4 und der Luftverdichter 6 sowie ein Generator 18 sitzen auf einer gemeinsamen Turbinenwelle 20.

In Figur 2 ist schematisch die Verbindung zwischen der Zustromleitung 8 und dem Gehäuse 22 des Luftverdichters 6 dargestellt. Dabei gelangt als gasförmiges Medium M Luft über ein Ausganggehäuse 7 und die Zustromleitung 8 in das Gehäuse 22 des Luftverdichters 6. Um einen Abriß der Luftströmung zu verhindern, ist im Einmündungsbereich 24 der Zustromleitung 8 ein aus Blechen 27 zusammengesetzter Strömungskörper 26 als Teil-Bell-Mouth angeordnet. Dieser umschließt den Innenumfang 28 des Einmündungsbereichs 24 an der Führungswand 30 annähernd zur Hälfte. Hier findet eine Umlenkung des gasförmigen Mediums M um 90° in Richtung auf den Luftverdichter 6 statt.

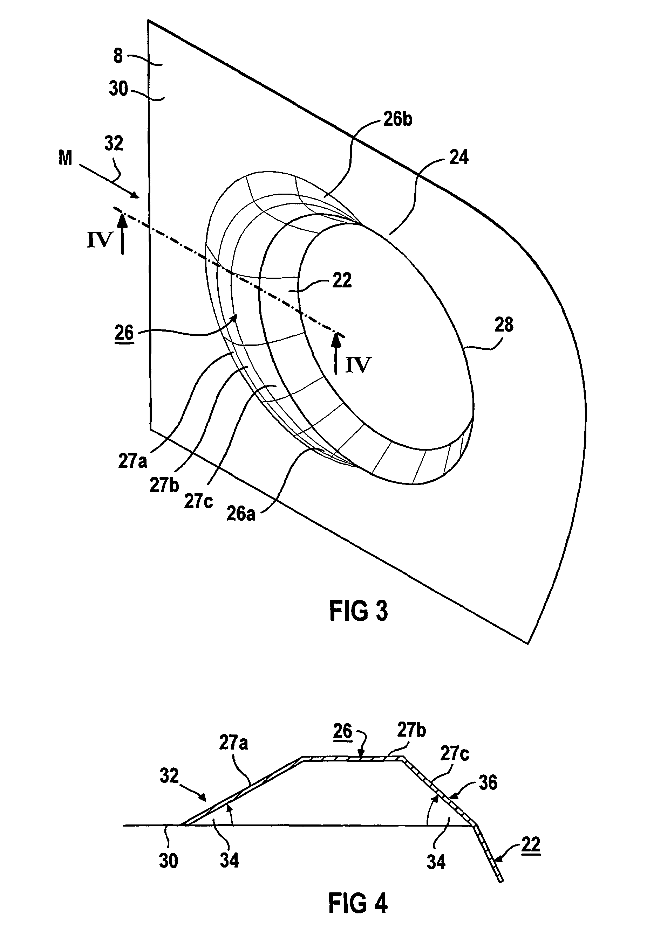

Figur 3 zeigt im Detail, daß der Strömungskörper 26 die verbindende Kante zwischen der Führungswand 30 der Zustromleitung 8 und dem Gehäuse 22 des Luftverdichters 6 abrundet. Der Strömungskörper 26 verjüngt sich dabei entlang des Innenumfangs 28 des Einmündungsbereichs 24 zu seinen beiden Enden 26a und 26b hin.

Einen Schnitt gemäß IV - IV in Figur 3 des Strömungskörpers 26 zeigt Figur 4. Gemäß Figur 4 weisen die Bleche 27 des Strömungskörpers 26 im Anströmbereich 32 einen anderen Neigungswinkel 34 relativ zur Führungswand 30 auf als im Abströmbereich 36.

Der Strömungskörper 26 kann mit besonders geringem technischen Aufwand hergestellt und besonders einfach an der Führungswand 30 im Einmündungsbereich 24 der Zustromleitung 8 angebracht werden. Damit weist die Gasturbinenanlage 2 einen besonders geringen Wartungs- und Reparaturaufwand auf. Gleichzeitig ist ein Anliegen der Strömung der Luft an der Führungswand 30 der Zustromleitung 8 im Einmündungsbereich 24 besonders zuverlässig gewährleistet.

## Patentansprüche

1. Gasturbinenanlage (2), bei der eine für eine Zuführung eines gasförmigen Mediums (M) vorgesehene Zustromleitung (8) in ein Gehäuse (22) mündet, mit einem im Einmündungsbereich (24) der Zustromleitung (8) in das Gehäuse (22) angeordneten Strömungskörper (26), der bewirkt, daß die dem Gehäuse (22) zuführbare Strömung des gasförmigen Mediums (M) im gesamten Einmündungsbereich (24) an einer Führungswand (30) anliegt, **dadurch gekennzeichnet, daß** der Strömungskörper den Innenumfang (28) des Einmündungsbereichs (24) lediglich zu einem vorgegebenen Anteil von weniger als zwei Drittel des Innenumfangs (28) umschließt.

2. Gasturbinenanlage (2) nach Anspruch 1, bei der der Strömungskörper (26) den Innenumfang (28) des Einmündungsbereichs (24) annähernd zur Hälfte umschließt.

3. Gasturbinenanlage (2) nach Anspruch 1 oder 2, bei der das Gehäuse (22) das des Luftverdichters (6) ist.

4. Gasturbinenanlage (2) nach einem der Ansprüche 1 bis 3, bei der der Strömungskörper (26) sich entlang des Innenumfangs (28) des Einmündungsbereichs (24) zu seinen beiden Enden (26a, 26b) hin verjüngt.

5. Gasturbinenanlage (2) nach einem der Ansprüche 1 bis 4, bei der der Strömungskörper (26) aus einer Anzahl von Blechen (27a, 27b) zusammengesetzt ist, wobei die Bleche (27a) im Anströmbereich (32) einen anderen Neigungswinkel (34) relativ zur Führungswand (30) aufweisen als die Bleche (27b) im Abströmbereich (36).

## Claims

1. Gas turbine plant (2), wherein an intake line (8) intended for supplying a gaseous medium (M) issues into a housing (22), comprising a flow body (26), which is arranged in the region of issue (24) of the intake line (8) into the housing (22) and has the effect that the flow of the gaseous medium (M) which can be supplied to the housing (22) abuts against a guide wall (30) throughout the region of issue (24), **characterized in that** the flow body encloses the inner periphery (28) of the region of issue (24) merely to a predefined proportion of less than two thirds of the inner periphery (28).

2. Gas turbine plant (2) according to Claim 1, wherein the flow body (26) encloses the inner periphery (28) of the region of issue (24) to a proportion of approximately half.

3. Gas turbine plant (2) according to Claim 1 or 2, wherein the housing (22) is that of the air compressor (6).

4. Gas turbine plant (2) according to one of Claims 1 to 3, wherein the flow body (26) tapers towards its two ends (26a, 26b) along the inner periphery (28) of the region of issue (24).

5. Gas turbine plant (2) according to one of Claims 1 to 4, wherein the flow body (26) is composed of a number of metal sheets (27a, 27b), the metal sheets (27a) in the region of inflow (32) having a different angle of inclination (34) in relation to the guide wall (30) than the metal sheets (27b) in the region of outflow (36).

## Revendications

1. Turbine ( 2 ) à gaz, dans laquelle un conduit ( 8 ) d'entrée prévu pour l'entrée d'un milieu ( M ) gazeux débouche dans un carter ( 22 ), comprenant un corps (26) d'écoulement, qui est disposé dans la zone ( 24 ) d'embouchure du conduit ( 8 ) d'entrée dans le carter ( 22 ) et qui fait que le courant, pouvant être envoyé au carter ( 22 ), du milieu ( M ) gazeux s'applique dans toute la zone ( 24 ) d'embouchure à une paroi ( 30 ) de guidage, **caractérisée en ce que** le corps d'écoulement entoure le pourtour ( 28 ) intérieur de la zone ( 24 ) d'embouchure seulement pour un proportion prescrite de moins de deux tiers du pourtour ( 28 ) intérieur.

2. Turbine ( 2 ) à gaz suivant la revendication 1, dans laquelle le corps ( 26 ) d'écoulement entoure le pourtour ( 28 ) intérieur de la zone ( 24 ) d'embouchure à peu près pour la moitié.

3. Turbine ( 2 ) à gaz suivant la revendication 1 ou 2, dans laquelle le carter ( 22 ) est celui du compresseur ( 26 ) d'air.

4. Turbine ( 2 ) à gaz suivant l'une des revendications 1 à 3, dans laquelle le corps ( 26 ) d'écoulement se rétrécit vers ses deux extrémités ( 26a, 26b ) le long du pourtour ( 28 ) intérieur de la zone ( 24 ) d'embouchure.

5. Turbine ( 2 ) à gaz suivant l'une des revendications 1 à 4, dans laquelle le corps ( 26 ) d'écoulement est composé d'un certain nombre de tôles ( 27a, 27b ), les tôles ( 27a ) ayant dans la zone ( 32 ) d'afflux un angle ( 34 ) d'inclinaison par rapport à la paroi ( 30 ) de guidage autre que celui des tôles ( 27 ) dans la zone ( 36 ) de sortie.
